# EUROPEAN PATENT APPLICATION

(11) **EP 2 280 541 A1**
(43) Date of publication of application: **02.02.2011**
(21) Application number: 09164253.8
(22) Date of filing: 30.06.2009
(51) Int. Cl.: H04N 5/44

(54) **Fast channel switch between digital televisison channels**

(71) Applicant: Trident Microsystems (Far East) Ltd., Grand Cayman (KY)
(72) Inventor: de Waal, Klaas, 5656 AE Eindhoven (NL); Brandsma, Ewout, 5656 AE Eindhoven (NL)
(74) Representative: Epping - Hermann - Fischer

(57) **Abstract**

The invention relates to a method for outputting a first digital video stream (BTS'). The method comprises: i) receiving a first transport stream (TS1) comprising a first plurality of time-multiplexed video channels (SRV1, SRV2, SRV3, SRV4); ii) buffering the first transport stream (TS1) to obtain a first buffered transport stream (BTS1); iii) selecting a first specific one from the first plurality of time-multiplexed video channels to obtain a first selected video channel (SRV1); iv) searching the first buffered transport stream (BTS1) for a first start (GOPS1) of a first group of pictures of the first selected video channel (SRV1), and v) outputting the first buffered transport stream (BTS1) starting from the first start (GOPS1) of the first group of pictures to obtain the first digital video stream (BTS'). The invention further relates to a system for carrying out such method. The invention provides for very fast channel switching (zapping) due to the fact that the start of the group of pictures of the selected channel is available in the buffer almost instantly.

## Description

### FIELD OF THE INVENTION

The invention relates to a method for outputting a first digital video stream which features fast switching to a further digital video stream. The invention further relates to a system for performing such method, and to a computer program product comprising instructions for causing a processor to perform such method.

### BACKGROUND OF THE INVENTION

A well known disadvantage of digital television receivers compared with analogue television receivers is that the time it takes to switch from one channel to another channel is much longer in a digital television receiver. A tuner in a digital television receiver produces a transport stream that contains one or more television channels or services. One service is selected and then decoded. Decoding the video stream of a particular service can start at the beginning of a group-of-pictures. The time to wait for the beginning of a group-of-pictures is a significant part of the time it takes to switch from one channel to another.

This problem has been recognized before, for example in European patent application EP1775953 A1. This document describes how buffering individual video streams can decrease switching time. In particular, this document discloses a method for handling a plurality of digital video streams, each of the digital video streams being encoded in sequences of frames. Each of the sequences of frames comprises a key frame, at least one reference frame and further frames. The key frame and the at least one reference frame are suitable for deriving frame information for said further frames. The known method comprises displaying at least a first digital video stream to be displayed and buffering at least one of said key frame or said at least one reference frame for a moving window of at least a second digital video stream allowing extraction of moving images from the buffered key frame or reference frame(s) when the second digital video stream is selected to be displayed. The document also discloses a controller for controlling buffering of video information of a digital video stream not-displayed at that moment.

A severe problem of the known method is that it requires quite a number of buffers, i.e. one buffer per digital video stream to which fast channel switch is required. A large number of buffers also implies a larger software and/or system complexity for carrying out such method.

### SUMMARY OF THE INVENTION

It is an object of the invention to provide a method of outputting a digital video stream in which the number of buffers required is reduced without substantially comprising the channel switch time.

The invention is defined by the independent claims. The dependent claims define advantageous embodiments.

In a first aspect, the invention relates to method for outputting a first digital video stream, wherein the method comprises:
- receiving a first transport stream comprising a first plurality of time-multiplexed video channels;
- buffering the first transport stream to obtain a first buffered transport stream;
- selecting a first specific one from the first plurality of time-multiplexed video channels to obtain a first selected video channel;
- searching the first buffered transport stream for a first start of a first group of pictures of the first selected video channel, and
- outputting the first buffered transport stream starting from the first start of the first group of pictures to obtain the first digital video stream.

The effect of the features of the method in accordance with the invention will be explained hereinafter. Instead of buffering each individual digital stream, as what is done in the known method, in the invention the transport stream is buffered. The transport stream typically comprises a plurality of time-multiplexed video channels. Once a specific one from the plurality of time-multiplexed video channels has been selected, the buffered transport stream is searched until the start of a group of pictures of the selected video channel is found. In case of backward searching, this is preferably the first-occurring start of the group of pictures but this is not essential; it may also be a second or further-occurring start. The advantage of selecting the first-occurring start is that the latency with respect to real-time is minimal. Alternatively, it is also possible to start searching from the beginning of the buffered transport stream and then search forward until the first, second, further-occurring or last-occurring start. Subsequently, the buffered transport stream is output starting from this group of pictures. In view of the above it must be borne in mind that (backward) searching in a digital video stream can be done quite rapidly (for example using software), i.e. in very small fractions of a second, for example 10 milliseconds, which is much faster than the conventional 0.5 second zap time. In other words, every time a specific one of the plurality of video channels is selected, the group-of-pictures is available almost instantly. Only one buffer is required per transport stream, and channel switch/zapping time is mainly determined by the search speed, i.e. a tiny fraction of a second. It must be noted that the length of the group of pictures may vary heavily. In some standards it may reach up to several seconds, which renders the invention even more advantageous.

An embodiment of the method in accordance with the invention further comprises:
- selecting a second specific one from the first plurality of time-multiplexed video channels to obtain a further selected video channel;
- searching the first buffered transport stream for a further start of a further group of pictures of the further selected video channel, and
- outputting the first buffered transport stream starting from the further start of the further group of pictures to obtain the first digital video stream.
This embodiment of the method constitutes real-time "zapping" between different video channels in the same transport stream. The switching speed between said first channel and the further channel is mainly determined by the speed at which the first buffered transport stream is searched until the corresponding start of group of pictures has been found. In case of backward searching, the further start is preferably the first-occurring start of the group of pictures, but this is not essential. It may also be a second-occurring or further-occurring start. Alternatively, it is also possible to start searching from the beginning of the buffered transport stream and then search forward until the first, second or further-occurring start.

An embodiment of the method in accordance with the invention further comprises:
- receiving a second transport stream comprising a second plurality of time-multiplexed video channels, and
- buffering the second transport stream to obtain a second buffered transport stream.
In this embodiment the receiving of the second transport stream comprising the second plurality of time-multiplexed video channels effectively increases the total number of video channels to be selected from. Conventionally, transport streams are broadcasted (wireless or over physical networks) as an RF signal having a certain frequency band, for example having a width of 8MHz. The RF signal is typically received by a tuner and demodulated into a stream of digital bits. The width of such frequency band typically determines the maximum amount of data that can be transmitted. Thus, in the digital domain the quantity of data (nr of bits) is fixed and thereby the number of bits per second of the transport stream. Each video channel that is comprised in the transport stream requires a certain amount of data. The higher the quality of the video channel the more data. Fixing the quality of the video channel thus determines the maximum amount of video channels that may be comprised in a transport stream. The number is typically somewhere between 2 and 8 for broadcast-quality TV channels. However, with a high-bandwidth stream, such as is possible with e.g. DVB-S2, and with very low-bitrate video channels, e.g. 300kbit/second, it is possible to have more than 100 video channels in one transport stream. The buffering of the second transport stream, as is done for the first transport stream, thus features fast zapping between channels in different transport streams.

An embodiment of the method in accordance with the invention further comprises:
- selecting a second specific one from the second plurality of time-multiplexed video channels to obtain a second selected video channel;
- searching the second buffered transport stream for a second start of a second group of pictures of the second selected video channel, and
- outputting the second buffered transport stream starting from the second start of the second group of pictures to obtain a second digital video stream.
This embodiment of the method constitutes real-time "zapping" between different video channels in different transport streams. The switching speed between said first channel and the further channel is mainly determined by the speed at which the second buffered transport stream is searched. In case of backward searching the second start is preferably the first-occurring start of the group of pictures, but this is not essential. It may also be a second-occurring or further-occurring start. Alternatively, it is also possible to start searching from the beginning of the buffered transport stream and then search forward until the first, second or further-occurring start.

In an embodiment of the method in accordance with the invention the first digital video stream is demultiplexed for extracting a first demultiplexed video channel from the first digital video stream. In this embodiment the first selected video channel (first digital video stream) is extracted from the transport stream.

In an embodiment of the method in accordance with the invention the first demultiplexed video channel is decoded for obtaining a first displayable television channel. A transport stream comprises compressed video information, for example MPEG-2 format or high-definition television coding, such as H264. In order to be able to display such video channel, it must be decoded into a displayable format.

In an embodiment of the method in accordance with the invention the second digital video stream is demultiplexed for extracting a second demultiplexed video channel from the second digital video stream. In this embodiment the second selected video channel (second digital video stream) is extracted from the transport stream.

In an embodiment of the method in accordance with the invention the second demultiplexed video channel is decoded for obtaining a second displayable television channel. A transport stream comprises compressed video information, for example MPEG-2 format or high-definition television coding, such as H264. In order to be able to display such video channel, it must be decoded into a displayable format.

In an embodiment of the method in accordance with the invention the first displayable television channel and the second displayable television channel are both displayed. In a first main variant of last mentioned embodiment the first displayable television channel and the second displayable television channel are displayed simultaneously. Such embodiment is particularly useful in television systems having picture-in-picture facility, or in television systems having multiple output screens. In such system typically the buffer is connected to more than one search unit as will be explained later on. In a second main variant the first displayable television channel and the second displayable television channel are displayed one after another to obtain a fast zapping between the channels. This complies with normal operation of a single screen television.

In an embodiment of the method in accordance with the invention the searching of the first buffered transport stream and/or the second buffered transport stream is started at the end of the respective buffered transport stream and carried out backwardly. The advantage of this embodiment is that when the first most recent-occurring GOP start is used then the latency with respect to real-time is kept minimal. It is also possible to find the most recent-occurring GOP start by starting at the beginning of the buffer and searching forward until the last GOP start. Searching backward until the first GOP start has the advantage that the searching is fastest.

In a second aspect, the invention relates to a system for carrying out the method in accordance with the invention. Further embodiments and corresponding advantageous are fully in line with the corresponding embodiments of the method. More information will be given in the description of the detailed embodiments. It must be noted at this point that a person skilled in the art to whom the method in accordance with the invention is given, may come up with many different systems, which can carry out that method. The number of variations that is possible in such system is almost infinite. All such variations do not depart from the scope of the invention as claimed. A first general remark about the possible variations concerns the possibility of moving, distributing, combining, merging, splitting functions of certain blocks. A second general remark concerns the possibility of implementing functions in hardware, in software, or in both.

In an embodiment of the system in accordance with the invention the system comprises:
- a first input for receiving a first transport stream comprising a first plurality of time-multiplexed video channels;
- a first transport stream buffer coupled to the first input and being configured for buffering the first transport stream to obtain a first buffered transport stream;
- a controller for selecting a first specific one from the first plurality of time-multiplexed video channels to obtain a first selected video channel;
- a search unit coupled to the first transport stream buffer and being configured for searching the first buffered transport stream for a first start of a first group of pictures of the first selected video channel, the search unit being controlled by the controller, and
- an output coupled to the search unit and being configured for outputting the first buffered transport stream starting from the first start of the first group of pictures to obtain the first digital video stream.

An embodiment of the system in accordance with the invention further comprises:
- a second input for receiving a second transport stream comprising a second plurality of time-multiplexed video channels, and
- a second transport stream buffer coupled to the second input and being configured for buffering the second transport stream to obtain a second buffered transport stream.

An embodiment of the system in accordance with the invention further comprises:
- a further controller for selecting a second specific one from the second plurality of time-multiplexed video channels to obtain a second selected video channel;
- a further search unit coupled to the second transport stream buffer and being configured for searching the second buffered transport stream for a second start of a second group of pictures of the second selected video channel, the further search unit being controlled by the further controller, and
- outputting the second buffered transport stream starting from the second start of the second group of pictures to obtain a second digital video stream.

In an embodiment of the system in accordance with the invention the controller and further controller are combined into one selection controller.

In an embodiment of the system in accordance with the invention the search unit and further search unit are combined into one buffer search unit.

In an embodiment of the system in accordance with the invention the buffer search unit is configured for i) first selecting one of the first buffered transport stream and the second buffered transport stream, and for ii) subsequent searching of a selected one of the buffered transport streams.

In an embodiment of the system in accordance with the invention the search unit and/or the further search unit is configured for starting at the end of the first buffered transport stream and/or the second buffered transport stream and searching backwardly.

In a third aspect, the invention relates to a computer program product comprising instructions for causing a processor to perform the method in accordance with the invention.

These and other aspects of the invention are apparent from and will be elucidated with reference to the embodiments described hereinafter.

### BRIEF DESCRIPTION OF THE DRAWINGS

In the drawings:
Fig. 1 shows a system in accordance with a first embodiment of the invention;
Fig. 2 shows an illustrative visualization of contents of the transport stream buffer;
Fig. 3 shows a system in accordance with a second embodiment of the invention;
Fig. 4 shows a system in accordance with a third embodiment of the invention, and
Fig. 5 shows a system in accordance with a fourth embodiment of the invention.

### List of reference numerals:

- A: Antenna or cable network
- RFS: RF modulated signal
- TD1: first tuner/demodulator unit
- TD2: second tuner/demodulator unit
- TD3: third tuner/demodulator unit
- TD4: fourth tuner/demodulator unit
- TS1: first transport stream
- TS2: second transport stream
- TS3: third transport stream
- TS4: fourth transport stream
- BF1: first transport stream buffer
- BF2: second transport stream buffer
- BF3: third transport stream buffer
- BF4: fourth transport stream buffer
- BTS1: first buffered transport stream
- BTS2: second buffered transport stream
- BTS3: third buffered transport stream
- BTS4: fourth buffered transport stream
- SR/SEL: combined search and select unit
- CTRL: controller
- BTS': selected (and optionally time-shifted) buffered transport stream
- DM: demultiplexer
- DMCH: demultiplexed video channel
- DEC: decoder
- DCH: displayable video channel
- TV: television, monitor or display
- TSW: location in transport stream buffer being written
- SRV1: first service
- SRV2: second service
- SRV3: third service
- SRV4: fourth service
- GOPS1: first-occurring start of group of pictures of first service
- GOPS2: first-occurring start of group of pictures of second service
- GOPS2': second-occurring start of group of pictures of second service
- GOPS3: first-occurring start of group of pictures of third service
- GOPS4: first-occurring start of group of pictures of fourth service
- Cl: control interface/control signals
- CHDEC: channel decoder (without transport stream buffer)
- SSDEC: special source decoder (with transport stream buffers)
- SSDEC': less special source decoder (without transport stream buffers)
- SCHDEC: special channel decoder (with transport stream buffer)
- TDB1: first tuner/demodulator with integrated transport stream buffer
- TDB2: second tuner/demodulator with integrated transport stream buffer
- TDB3: third tuner/demodulator with integrated transport stream buffer
- TDB4: fourth tuner/demodulator with integrated transport stream buffer
- MCCHDEC: multi-channel channel decoder
- SDEC: conventional source decoder

### DETAILED DESCRIPTION OF THE PREFERRED EMBODIMENT

A well known disadvantage of digital television receivers compared with analogue television receivers is that the time it takes to switch from one channel to another channel is much longer in a digital television receiver. The invention aims at providing a method and system for decreasing the channel switch time in digital television receivers by means of transport stream buffering. In systems where the transport stream originates from a tuner/demodulator at least one buffer per tuner/demodulator is required. A tuner/demodulator in a digital television receiver produces a transport stream that contains one or more television channels or services. One service is selected and then decoded. Decoding the video stream of a particular service can start at the beginning of a group-of-pictures. The time to wait for the beginning of a group-of-pictures is a significant part of the time it takes to switch from one channel to another, for instance the DVB/MPEG2 broadcast television in Europe uses typically a group-of-pictures length of 12 frames, equivalent to 12/25 second. For ATSC/MPEG2 broadcast television in the USA the group-of-pictures length is typically15 frames, equivalent to 15/30 second, so the time it takes to wait for the start of a group-of-pictures can be up to half a second. If the channel switch is to another service in the same transport stream or to a service in another transport stream that is currently being received by another tuner then you still have to wait for the start of a group-of-pictures before decoding can start.

The invention eliminates (or at least strongly reduces) the time to wait for the start of group-of-pictures when the new service is in a transport stream that is already received by one of the tuners of the digital television receiver. By buffering the incoming transport stream in its entirety and deferring demultiplexing until the service will be displayed there are not more demultiplexers needed than for a conventional system. A demultiplexer is only needed for a service that is actually processed further, be it displayed, encoded or forwarded to another device over a network. As a matter of fact, until now one of the reasons for limiting the length of the group of pictures has been the long-zapping time if the length was chosen longer. It is the invention that makes it possible to reconsider the length of the group of pictures without seriously compromising the short zapping time (searching in a buffer can still be done relatively fast).

In order to facilitate the discussion of the detailed embodiments a few expressions are defined hereinafter.

Video streams may comprise a lot of data. In order to reduce this data temporal video compression algorithms have been developed, such as MPEG2 coding, MPEG4, coding, H264 coding, etc. In most video compression algorithms the digital video streams are encoded in sequences of frames. Each of the sequences of frames comprising a key frame (a frame that is independent of all other frames), and further frames that are either directly or indirectly dependent on this key frame. In the different Motion Picture Expert Group (MPEG) standards, which are often used compression/decompression standards, such sequences of frames are also referred to as Group Of Pictures (GOP).

Throughout this description the term "transport stream" is used. Transport stream (TS, TP, MPEG-TS, or M2T) is a communications protocol for audio, video, and data. It is a type of digital container format that encapsulates packetized elementary streams and other data. TS is specified in MPEG-2 Part 1, Systems, which is also known as ITU-T Rec. H.222.0 (ISO/IEC standard 13818-1, see also http://neuron2.net/library/mpeg2/iso13818-1.pdf). Its design goal is to allow multiplexing of digital video and audio and to synchronize the output. Transport stream offers features for error correction for transportation over unreliable media, and is used in broadcast applications such as DVB and ATSC. It is contrasted with program stream, which is designed for more reliable media such as DVDs. A typical data rate of a transport stream broadcasted over a physical network is 5Mbyte/s (current digital television standards in Europe). A typical data rate of a transport stream broadcasted in a wireless manner is 3Mbyte/s (for example Digitenne® from KPN).

A (transport stream) packet is the basic unit of data in a transport stream. It consists of a sync byte, whose value is 0x47, followed by three one-bit flags and a 13-bit Packet Identifier (PID). This is followed by a 4-bit continuity counter. Additional optional transport fields, as signaled in the optional adaptation field, may follow. The rest of the packet consists of payload. Packets are 188 bytes in length (see also the earlier mentioned ISO/IEC 13818-1 standard, page 11), but the communication medium may add some error correction bytes to the packet. DVB-ASI uses 204 bytes and ATSC 208 bytes as transport stream packet. ATSC transmission adds 20 bytes of Reed-Solomon forward error correction to create a packet that is 208 bytes long. The 188-byte packet size was originally chosen for compatibility with ATM systems. A transport stream packet comprises normal payload data, for example video data, or something special, i.e. a socalled adaptation field. Although there are many types of adaptation field data, for the invention it is only of interest to find the start of a group of pictures. In order to find the start of a group of pictures the transport stream packet has to be searched. More information on the searching algorithm is described later.

Each table or elementary stream in a transport stream is identified by the 13-bit packet ID (PID). A demultiplexer extracts elementary streams from the transport stream in part by looking for packets identified by the same PID. In most applications, time-division multiplexing will be used to decide how often a particular PID appears in the transport stream.

Packetized Elementary Stream (PES) is a specification defined by the MPEG communication protocol (see the MPEG-2 standard) that allows an elementary stream to be divided into packets. The elementary stream is packetized by encapsulating sequential data bytes from the elementary stream inside PES packet headers. A typical method of transmitting elementary stream data from a video or audio encoder is to first create PES packets from the elementary stream data and then to encapsulate these PES packets inside transport stream (TS) packets or program stream. The TS packets can then be multiplexed and transmitted using broadcasting techniques, such as those used in an ATSC and DVB.

The payload unit start indicator is a bit in the second byte of a transport stream packet (one of the earlier mentioned three one-bit flags). The bit has value "1" in case of a start of PES data or PSI, otherwise the bit has value "0".

PAT stands for Program Association Table. It lists all programs available in the transport stream. Each of the listed programs is identified by a 16-bit value called *program_number.* Each of the programs listed in PAT has an associated value of PID for its Program Map Table (PMT). The value 0x0000 of *program_number* is reserved to specify the PID where to look for Network Information Table (NIT). If such a program is not present in PAT the default PID value (Ox0010) shall be used for NIT. TS Packets containing PAT information always have PID 0x0000.

Program Map Tables (PMTs) contain information about programs. For each program, there is one PMT. Each PMT shall be transmitted on a separate PID although technically it is not required. The PMTs describe which PIDs contain data relevant to the programs. PMTs also provide metadata about the streams in their constituent PIDs. For example, if a program contains an MPEG-2 video stream, the PMT will list this PID, describe it as a video stream, and provide the type of video that it contains (in this case, MPEG-2). The PMT may also contain additional descriptors providing data about its constituent streams.

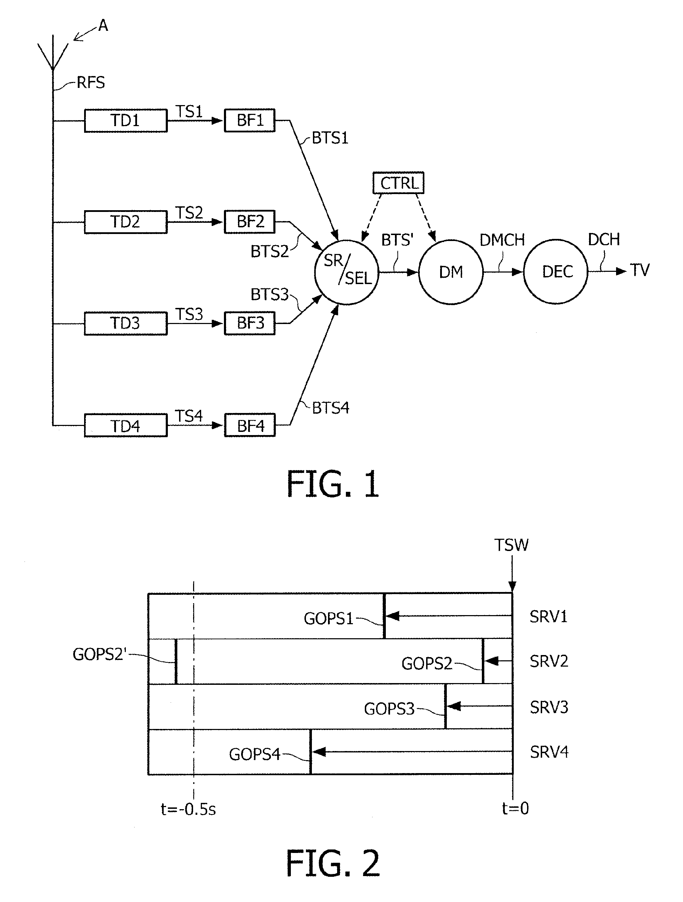

Fig. 1 shows a system in accordance with a first embodiment of the invention. The system comprises an antenna A configured for receiving an RF modulated signal. In an alternative embodiment the antenna may be an antenna cable (which may be shared between different houses or buildings). The RF modulated signal is fed into four respective tuner/demodulator units TD1, TD2, TD3, TD4. This number of tuner/demodulator units is used throughout all examples in this description. However, the invention is not limited to a specific number of tuner/demodulator units. Any number equal to or larger than 1 is possible. In general more tuner/demodulator units features receiving more transport streams in parallel. For the invention this means that more channels benefit from fast-zapping feature between channels. Each tuner/demodulator unit is preferably tuned to a particular one of available frequency bands, each band comprising a plurality of channels or services in a single transport stream. Typically one such frequency band has a width of 8MHz. Each respective one of the tuner/demodulator units TD1, TD2, TD3, TD4 produces a respective transport stream TS1, TS2, TS3, TS4. Each respective one of the transport streams TS1, TS2, TS3, TS4 is fed into a respective transport stream buffer BF1, BF2, BF3, BF4 to obtain respective buffered transport streams BTS1, BTS2, BTS3, BTS4. The transport streams are all fed into a single combined search/select unit SR/SEL, which selects a specific channel or service of interest (possibly under command of a user) within one of said buffered transport streams BTS1, BTS2, BTS3, BTS4 under control of a controller CTRL. The search/select unit SR/SEL outputs a selected buffered transport stream BTS', which is subsequently fed into a demultiplexer DM to obtain a demultiplexed video channel DMCH. The demultiplexer DM is also controlled by the controller CTRL, because its function is to extract the selected video channel from the plurality of video channels in the selected buffered transport stream BTS'. The demultiplexed video channel DMCH is fed into a decoder DEC to obtain a displayable video channel DCH, which can be displayed on a TV, monitor or any other display device. In this example there is only one display/output device, namely the television TV. If there is more than one output device that requires the video channel or service, for example one output going to a video recorder, an additional demultiplexing/decoding "branch" is required. In the invention, this branch comprises a further search/select unit (that is also connected to the transport stream buffers BF1, BF2, BF3, BF4), a further demultiplexer, and a further decoder.

In this embodiment the buffers BF1, BF2, BF3, BF4 are passive units (not controlled) that are actively searched by the search and select unit SR/SEL. However, it is also possible to integrate the search functionality into the buffers themselves, turning the buffers into actively controlled elements that are controlled by the controller CTRL.

The system illustrated in Fig. 1 operates as follows. Each tuner/demodulator unit TD1, TD2, TD3, TD4 produces a respective transport stream TS1, TS2, TS3, TS4. Each respective transport stream is written into a respective transport stream buffer BF1, BF2, BF3, BF4. When a new channel is to be displayed, for example Service1 received on the first tuner/demodulator unit TD1, then the first transport stream buffer BF1 of the first tuner/demodulator unit TD1 is selected and the first buffered transport stream BTS1 is searched starting at the end of the first buffer BF1 (that is the location where bits are written that corresponding with the current time). In this embodiment the search is performed backwards (it is not essential to search backward though) until the start of the group of pictures (GOP) of Service1 is found. The search/select unit SR/SEL starts playing back the first buffered transport stream (from the starting location found in the buffer BF1. In other words the selected buffered transport stream BTS' on the output of the search/select unit SR/SEL comprises the start of the group of pictures of Service1 almost directly after that Service1 has been selected. In that respect the selected buffered transport stream BTS' can differs from the first buffered transport stream BTS1, i.e. a certain number of bits has been "cut out". As long as a channel is selected that is comprised in one of the transport streams TS1, TS2, TS3, TS4 being received by the tuner/demodulator units TD1, TD2, TD3, TD4 the above-described select and search mechanism can be carried out and fast-zapping is obtained.

The length of the transport stream buffers BF1, BF2, BF3, BF4 is preferably of such length that at all times at least one start of a group of pictures of all services in the transport stream are present. In an embodiment of the system the buffer has a length of 8 Mbyte. This embodiment has been used with a DVB-T broadcast stream from Belgium with the channels "één" and "Ketnet/Canvas", a DVB-T broadcast stream from Germany with the channels "ZDF", "ZDF-Info", "3Sat" and "Doku/Kika", a DVB-T broadcast stream from Germany with the channels "MDR FERNSEHEN", "NDF FS", "Südwest RP" and WDR Duisburg", a DVB-C stream from The Netherlands with the channels "Nederland 1 ", "Nederland 2" and "Nederland 3" and with a recorded DVB-T stream from the United Kingdom with the channels "BBC ONE", "BBC NEWS", "CBBC Channel" and "BBC TWO".

The invention is equally applicable to systems with one tuner/demodulator and to systems with multiple tuners/demodulators. In a system with one tuner/demodulator the channel switch time reduction that is possible by this invention will only be applicable when switching between services that are part of the same transport stream. In a system with multiple tuners/demodulators the channel switch time reduction is possible when switching between services that are in transport streams that are currently being received. Ideally there should be enough tuners/demodulators to receive all transport streams of interest.

Fig. 2 shows an illustrative visualization of contents of the transport stream buffer. The transport stream in Fig. 2 comprises four services (or channels): a first service SRV1, a second service SRV2, a third service SRV3, and a fourth service SRV4. The end of the buffer TSW is the location that is being written. Although the services have been illustrated as separate rows in Fig. 2 in practice the services are time-multiplexed with a very high granularity, i.e. at transport stream packet level. For example, the transport stream comprises three television channels, i.e. NED1, NED2, and NED3; in this transport stream the transport stream packets may be arranged as follows: NED1, NED, NED3, adm, NED1, NED2, NED, adm, etc. One transport stream packet has a length of 188 bytes, which at a data rate of 5Mbyte/s corresponds with 37.6µs. Furthermore, one key frame (also referred to as I-frame in MPEG2) comprises about 188kbyte of data, which corresponds with about 1000 transport stream packets! In

Fig. 2 the first service SRV1 has a first occurring start of a group of pictures GOPS1 at a buffer location corresponding with about -0.20s. The second service SRV2 has a first occurring start of a group of pictures GOPS2 at a buffer location corresponding with about -0.05s. Furthermore, the second service SRV2 has a second-occurring start of a group of pictures GOPS2' at a buffer location corresponding with about -0.53s (the length of a group of pictures is 0.48s). The third service SRV3 has a first-occurring start of a group of pictures GOPS3 at a buffer location corresponding with about -0.12s. The fourth service SRV4 has a first-occurring start of a group of pictures GOPS4 at a buffer location corresponding with about -0.30s.

As already mentioned earlier in this description, searching in the transport stream buffers BF1, BF2, BF3, BF4 can be carried out extremely very fast. The only data of interest in the buffered transport streams BTS1, BTS2, BTS3, BTS4 is the start of a group of pictures. All other data can be simply discarded in this search. A possible search algorithm in case of MPEG-2 video streams in an MPEG2 transport stream is as follows:
- Start at end of buffer
- Search backwards for start of a transport stream packet
- Loop backwards in steps of one transport stream packet and
- check for PID; if found then
- check for payload unit start indicator; if found then
- check for adaptation field; if found then
- check for PES header; if found then
- check for sequence header; if found then
- check for sequence extension (MPEG2 only, not present in MPEG1 for example) and skip if present; then
- check for GOP header; if found then
- Ready, start playback from this position.

Reference is made to the following MPEG2 standard, which is hereby incorporated by reference in its entirety: MPEG-2 Part 1, Systems, which is also known as ITU-T Rec. H.222.0 (ISO/IEC standard 13818-1, see also http://neuron2.net/library/mpeg2/iso13818-1.pdf).

It must be noted that the precise search algorithm is heavily dependent on the type of transport stream and the compression algorithms chosen. The search is started at the end of the transport stream buffer and carried out backwardly, or (in alternative embodiments) the search is started at the beginning of the transport stream buffer and carried out forward, until the start of a group of pictures of the channel of interest is found. Other search algorithms are also possible like combined parallel backward and forward searching. The search algorithm may be implemented in hardware or in software or a combination of both. For video compression algorithms other than MPEG2 the search algorithm may have to be modified slightly; instead of searching for a GOP header it is possible to search for the start of an I-frame or any other reference frame from which it is possible to start decoding.

The invention provides additional advantages over the prior art. A major advantage is that the length of the group of pictures is no longer relevant (only in that the transport stream buffer has to be long enough). Moreover with the system and method in accordance with the invention, even variations in the length of the group of pictures over time are no problem at all. Neither are variations between channels or services in the same transport stream a problem. The search algorithm is such that the start of the group of pictures is always found.

A digital television receiver (DTV) or a set-top box (STB) is typically decomposed into a channel decoder and a source decoder, or- in case of multi-channel capabilities - a plurality of channel decoders and a plurality of source decoders. The channel decoder comprises of tuner and demodulator and outputs a transport stream to the source decoder. The source decoder inputs this transport stream and processes it further. This further processing typically involves demultiplexing followed by audio/video decoding and optionally (in case of DTV) rendering. Alternatively, the demultiplexed signal may be recorded with a digital video recorder (DVR) and/or forwarded to another device over a network, i.e. a in case of Multi room-DVR.

The source decoder and the channel decoder are different subsystems of the digital television receiver. They may be different IC's or even different PCB's. Interfacing between these subsystems is more or less standardized. A parallel or serial transport stream interface is used to convey the transport stream data from channel decoder to source decoder and an I2C control bus is used by the source decoder to send commands to the channel decoder, for example to have the tuner of the channel decoder to tune to a particular frequency in order to receive a particular multiplex.

As the transport stream buffer and the select functions according to the invention are at the interface between channel decoder and source decoder they may be made part of either subsystem. Three different options for partitioning have been identified in the embodiments described hereinafter, wherein each option has its own specific advantages.

It must be noted, that the descriptions below describe a plurality of channel decoders and a singularity of source decoders. The invention applies equally well to a singularity of channel decoders and/or a plurality of source decoders. It must be further noted that a plurality of channel decoders or a plurality of source decoders may (partially) be implemented as a single device embodied on a single PCB or IC.

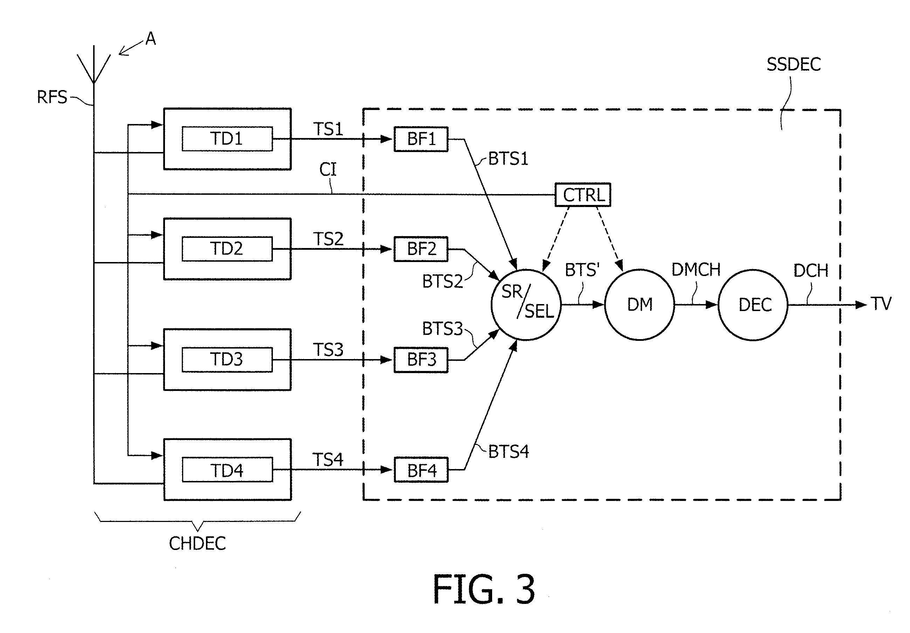

Fig. 3 shows a system in accordance with a second embodiment of the invention. This figure will be discussed in as far as it differs from Fig. 1. A first difference is that a control signal Cl (for example using an I2C interface) has been illustrated from the controller CTRL to the respective tuner/demodulator units TD1, TD2, TD3, TD4. The control interface/control signal Cl from the controller to the tuner/demodulator units TD1, TD2, TD3, TD4 serves to tune in the respective tuners on a specific frequency band. After tuning in of the tuners no further control of the tuner/demodulator units is required. Fig. 3 further shows four channel decoders CHDEC that are coupled to a special source decoder SSDEC, each channel decoder comprising a respective one of the earlier mentioned tuner/demodulator units TD1, TD2, TD3, TD4. The channel decoders (i.e. tuner/demodulators) produce transport streams TS1, TS2, TS3, TS4. The buffering is done in the special source decoder SSDEC. To this end the special source decoder comprises four respective transport stream buffers BF1, BF2, BF3, BF4 that are each connected to the respective receiving inputs. Depending on the implementation details of the source decoder this may be realized as a software function. The source decoder needs to support a transport stream input for every channel decoder to be connected.

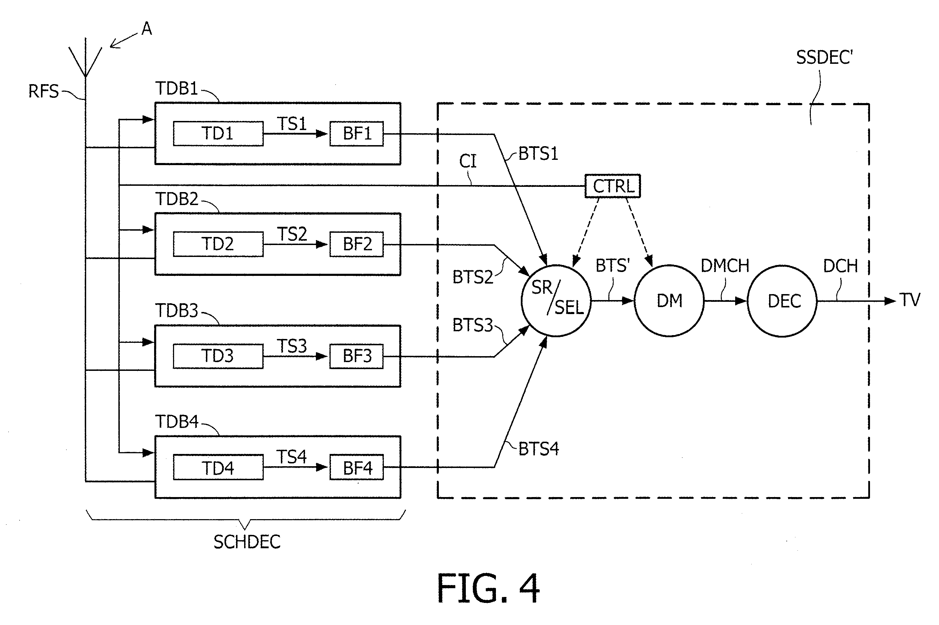

Fig. 4 shows a system in accordance with a third embodiment of the invention. This figure will be discussed in as far as it differs from Fig. 3. Fig. 4 also shows four channel decoders that are coupled to a (less) special source decoder SSDEC' without the buffers. However, in this embodiment the transport stream buffers BF1, BF2, BF3, BF4 are integrated in the channel decoders instead of the source decoder, which makes each respective combination TDB1, TDB2, TDB3, TDB4 of tuner/demodulator and transport stream buffer a special channel decoder SCHDEC. In this embodiment an additional command is added to the control interface CI (e.g. I2C bus) between source decoder SSDEC' and channel decoder SCHDEC: the source decoder SSDEC' can request the channel decoder SCHDEC to start streaming its currently received multiplex for a particular service (i.e. TV program). This service is preferably identified by the PIDs of its elementary streams. The source decoder SSDEC' can maintain an up-to-date mapping from services to PIDs, by tracking the updates of PAT and PMT tables in the stream. It must be noted that this embodiment has as drawback that the service-ID to PID mapping of transport streams, which are not selected, is possibly outdated, leading to an incidentally longer channel change delay. However, in practice this will not be a problem because PID assignments change very infrequently.

In an alternative embodiment, the service could be identified by the service-ID (=program number). However, that would require the channel decoder SCHDEC to parse the PAT and PMT tables by itself. The channel decoder SCHDEC is less capable of doing that compared to the source decoder SSDEC', as that operation already done by the demultiplexer DM in the source decoder SSDEC'.

The embodiment of Fig. 4 has benefits where the buffering function cannot be implemented in the source decoder for architectural or performance reasons. The interface to the channel decoder is conventional with the addition of a single command as discussed above.

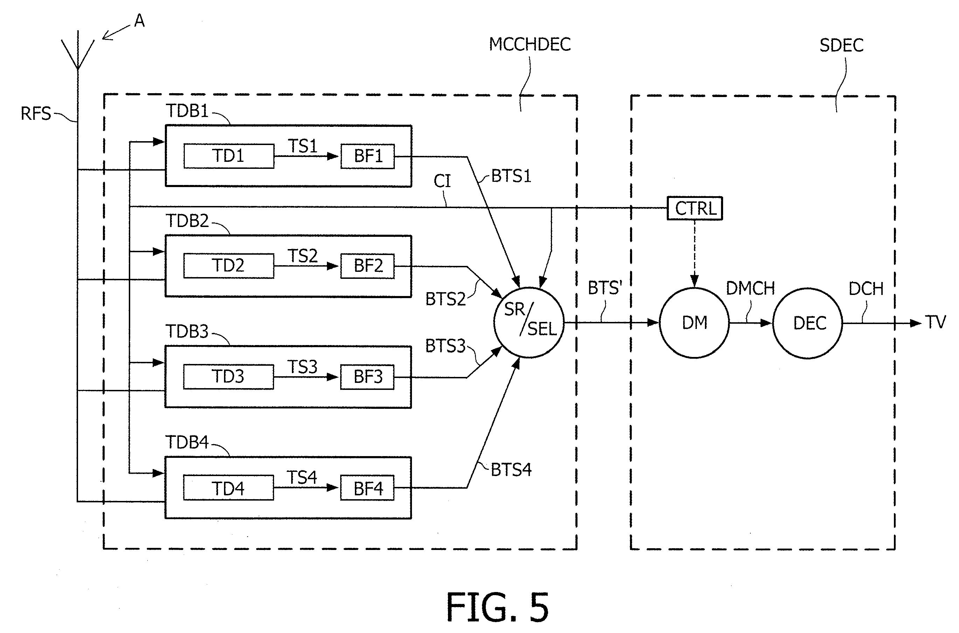

Fig. 5 shows a system in accordance with a fourth embodiment of the invention. This figure will be discussed in as far as it differs from Figs. 3 and 4. In this embodiment both the transport stream buffers BF1, BF2, BF3, BF4 as well as the search/select unit SR/SEL have been integrated into the channel decoder turning it into a multi-channel channel decoder MCCHDEC. As in the embodiment of Fig. 4, an additional control command is needed to select the service in the channel decoder device. In this embodiment such command also selects the specific channel decoder (multiplex) from a plurality of possible channel decoders. In other words the control command selects the specific service to be streamed from a plurality of possible multiplexes (as opposed to a single one in the embodiment in Fig. 4). Alternatively, the "multi-channel channel decoder" MCCHDEC could be configured to interpret the tuning command by selecting another channel decoder (+ buffer) instead of tuning to another frequency.

The embodiment in Fig. 5 also enables to connect an arbitrary number of channel decoders to a source decoder SDEC through a single transport stream (TS) interface. The benefit is that it becomes possible to perform fast zapping between a plurality of services, even if the source decoder is equipped with a single TS-input only.

Although it is possible to insert a separate "select" subsystem in between a plurality of channel decoders and the source decoder, the embodiment in Fig. 5 is most useful where all channel decoders and the select form a single subsystem (e.g. full-spectrum receiver). If the number of channel decoders is sufficient to receive all relevant channels, each channel decoder can obtain a fixed frequency setting and any channel change will be instantaneous.

Again the embodiment in Fig. 5 is equally valid for a plurality of source decoders. In this case a plurality of "select" functions will be available to provide a plurality of TS-outputs, which can be connected to each of the source decoders (or to a single source decoder subsystem capable of handling a plurality of TS-inputs).
The embodiments in Figs. 3 to 5 are just exemplary embodiments. Many variations providing the same functionality are possible and do not depart from the scope of the invention as claimed. All examples comprise an antenna for receiving an RF modulated signal that is fed into a tuner/demodulator unit, which produces the transport stream. However, the antenna and the tuner/demodulator unit are not essential to the invention. What is important for the invention is that a transport stream is received (it does not matter how) and subsequently buffered, and searched when a channel switch is carried out.

The invention provides a method for outputting a first digital video stream BTS'. The method comprises: i) receiving a first transport stream TS1 comprising a first plurality of time-multiplexed video channels SRV1, SRV2, SRV3, SRV4; ii) buffering the first transport stream TS1 to obtain a first buffered transport stream BTS1; iii) selecting a first specific one from the first plurality of time-multiplexed video channels to obtain a first selected video channel SRV1; iv) searching the first buffered transport stream BTS1 for a first start GOPS1 of a first group of pictures of the first selected video channel SRV1, and v) outputting the first buffered transport stream BTS1 starting from the first start GOPS1 of the first group of pictures to obtain the first digital video stream BTS'. The invention further provides a system for carrying out such method. The invention provides for very fast channel switching (zapping) due to the fact that the start of the group of pictures of the selected channel is available in the buffer almost instantly.

The invention may be applied in various application areas. For example, the invention may be applied in (integrated) digital TV receivers and set-top boxes. The invention may also be applied in any other video streaming application or digital broadcast application where switching between different transport streams is required.

Various variations of the system and method in accordance with the invention are possible and do not depart from the scope of the invention as claimed. It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. It will also be appreciated that such a program may have many different architectural designs. For example, a program code implementing the functionality of the method or system according to the invention may be subdivided into one or more subroutines. Many different ways to distribute the functionality among these subroutines will be apparent to the skilled person. The subroutines may be stored together in one executable file to form a self-contained program. Such an executable file may comprise computer executable instructions, for example processor instructions and/or interpreter instructions (e.g. Java interpreter instructions). Alternatively, one or more or all of the subroutines may be stored in at least one external library file and linked with a main program either statically or dynamically, e.g. at run-time. The main program contains at least one call to at least one of the subroutines. Also, the subroutines may comprise function calls to each other. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth. These instructions may be subdivided into subroutines and/or be stored in one or more files that may be linked statically or dynamically.

The carrier of a computer program may be any entity or device capable of carrying the program. For example, the carrier may include a storage medium, such as a ROM, for example a CD ROM or a semiconductor ROM, or a magnetic recording medium, for example a floppy disc or hard disk. Further the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage. Throughout the Figures, similar or corresponding features are indicated by same reference numerals or labels.

## Claims

1. A method for outputting a first digital video stream (BTS'), the method comprising:
- receiving a first transport stream (TS1) comprising a first plurality of time-multiplexed video channels (SRV1, SRV2, SRV3, SRV4);
- buffering the first transport stream (TS1) to obtain a first buffered transport stream (BTS1);
- selecting a first specific one from the first plurality of time-multiplexed video channels to obtain a first selected video channel (SRV1);
- searching the first buffered transport stream (BTS1) for a first start (GOPS1) of a first group of pictures of the first selected video channel (SRV1), and
- outputting the first buffered transport stream (BTS1) starting from the first start (GOPS1) of the first group of pictures to obtain the first digital video stream (BTS').

2. The method as claimed in claim 1, further comprising:
- selecting a second specific one from the first plurality of time-multiplexed video channels to obtain a further selected video channel (SRV2);
- searching the first buffered transport stream (BTS1) for a further start of a further group of pictures of the further selected video channel (SRV2), and
- outputting the first buffered transport stream (BTS1) starting from the further start (GOPS2) of the further group of pictures to obtain the first digital video stream (BTS').

3. The method as claimed in claim 1 or 2, further comprising:
- receiving a second transport stream (TS2) comprising a second plurality of time-multiplexed video channels, and
- buffering the second transport stream (TS2) to obtain a second buffered transport stream (BTS2).

4. The method as claimed in claim 3, further comprising:
- selecting a second specific one from the second plurality of time-multiplexed video channels to obtain a second selected video channel;
- searching the second buffered transport stream (BTS2) for a second start of a second group of pictures of the second selected video channel, and
- outputting the second buffered transport stream (BTS2) starting from the second start of the second group of pictures to obtain a second digital video stream.

5. The method as claimed in any one of claims 1 to 4, wherein the first digital video stream (BTS') is demultiplexed for extracting a first demultiplexed video channel (DMCH) from the first digital video stream (BTS').

6. The method as claimed in any one of the preceding claims, wherein the searching of the first buffered transport stream (BTS1) and/or the second buffered transport stream (BTS2) is started at the end of the respective buffered transport stream and carried out backwardly.

7. A system for carrying out the method as claimed in any one of the claims 1 to 6.

8. The system as claimed in claim 7, the system comprising:
- a first input for receiving a first transport stream (TS1) comprising a first plurality of time-multiplexed video channels (SRV1, SRV2, SRV3, SRV4);
- a first transport stream buffer (BF1) coupled to the first input and being configured for buffering the first transport stream (TS1) to obtain a first buffered transport stream (BTS1);
- a controller (CTRL) for selecting a first specific one from the first plurality of time-multiplexed video channels to obtain a first selected video channel (SRV1);
- a search unit (SR/SEL) coupled to the first transport stream buffer (BF1) and being configured for searching the first buffered transport stream (BTS1) for a first start (GOPS1) of a first group of pictures of the first selected video channel (SRV1), the search unit (SR/SEL) being controlled by the controller (CTRL), and
- an output coupled to the search unit (SR/SEL) and being configured for outputting the first buffered transport stream (BTS1) starting from the first start of the first group of pictures to obtain the first digital video stream (BTS').

9. The system as claimed in claim 8, further comprising:
- a second input for receiving a second transport stream (TS2) comprising a second plurality of time-multiplexed video channels, and
- a second transport stream buffer (BF2) coupled to the second input and being configured for buffering the second transport stream (TS2) to obtain a second buffered transport stream (BTS2).

10. The system as claimed in claim 9, further comprising:
- a further controller (CTRL) for selecting a second specific one from the second plurality of time-multiplexed video channels to obtain a second selected video channel;
- a further search unit (SR/SEL) coupled to the second transport stream buffer (BF2) and being configured for searching the second buffered transport stream (BTS2) for a second start of a second group of pictures of the second selected video channel, the further search unit (SR/SEL) being controlled by the further controller (CTRL), and
- outputting the second buffered transport stream (BTS2) starting from the second start of the second group of pictures to obtain a second digital video stream.

11. The system as claimed in claim 10, wherein the controller and further controller are combined into one selection controller (CTRL).

12. The system as claimed in claim 10 or 11, wherein the search unit and further search unit are combined into one buffer search unit (SR/SEL).

13. The system as claimed in claim 12, wherein the buffer search unit (SR/SEL) is configured for i) first selecting one of the first buffered transport stream (BTS1) and the second buffered transport stream (BTS2), and for ii) subsequent searching of a selected one of the buffered transport streams (BTS1, BTS2).

14. The system as claimed in any one of claims 7 to 13, wherein the search unit and/or the further search unit (SR/SEL) is configured for starting at the end of the first buffered transport stream (BTS1) and/or the second buffered transport stream (BTS2) and searching backwardly.

15. A computer program product comprising instructions for causing a processor to perform the method according to any one of claims 1 to 6.
